# EUROPEAN PATENT APPLICATION

(11) **EP 1 274 056 A2**
(43) Date of publication of application: **08.01.2003**
(21) Application number: 02254305.2
(22) Date of filing: 20.06.2002
(51) Int. Cl.: G08B 5/22, H04Q 7/22

(54) **Information system**

(30) Priority: 02.07.2001 GB 0116140
(71) Applicant: Nokia Corporation, 02150 Espoo (FI)
(72) Inventor: Davidson, Brian, Woking, Surrey GU21 3QD (GB); Mote, Steven, Musgrove, Somerset BA9 8EX (GB); Newstead, Robert, Frimley, Surrey GU16 5XT (GB); Lander, Ronald, Calabasas, CA 91302 (US); Fisher, David, Amersham, Buckinghamshire HP7 0AF (GB)
(74) Representative: Patel, Dhiren

(57) **Abstract**

The present invention provides a system comprising means that is arranged to be user actuable for generating an e-tag and defining a location condition and/or an event condition and a beneficiary, means that is arranged to be responsive to said e-tag to alert said beneficiary of said e-tag at said defined location and/or when the event condition is fulfilled.

The term e-tag covers any and all forms of electronic messages, notes and reminders. An e-tag may be a text, audio or imaged based.

An advantage of the present invention is that it allows an end-user using his mobile phone or PC to set up an e-tag so that it alerts the user to carry out a particular task or action at a given location or in response to a particular event. This is in contrast to prior art messaging or reminder arrangements in which an end-user would generate a reminder using for example his mobile phone so that it signals an alarm at a pre-determined time.

## Description

The present invention relates to an information communication system, in particular it relates to systems, methods and apparatus for providing information, in a form for example of a message or reminder, for a user.

Accordingly, the present invention in one aspect resides in a system comprising means that is arranged to be user actuable for generating an e-tag and defining a location condition and/or an event condition and a beneficiary, means that is arranged to be responsive to said e-tag to alert said beneficiary of said e-tag at said defined location and/or when the event condition is fulfilled.

In a further aspect, the present invention resides in a system comprising first means adapted to be user actuable for creating an e-tag and comprising means for defining one or more intended recipients of said e-tag and means for defining an event condition associated with said e-tag, and second means adapted to be responsive to said e-tag such that said one or more intended recipients is notified of said e-tag when said event condition is fulfilled.

The term e-tag as used herein covers any and all forms of electronic messages, notes and reminders. An e-tag may be at least a text, audio or imaged based.

An advantage of the present invention is that it allows an end-user using his mobile phone or PC to set up an e-tag so that it alerts the user to carry out a particular task or action at a given location or in response to a particular event. This is in contrast to prior art messaging or reminder arrangements in which an end-user generates a reminder using for example his mobile phone so that it signals an alarm at a pre-determined time.

Thus, the invention provides a user with a focussed message or reminder system which is to be received in the context of a specified physical location or in response to a specified event. Hence, it can be seen that an e-tag is location and/or event critical and thus the user benefits in that he is alerted to do something or provided with some information at the appropriate place, and therefore at precisely the right time. In other words, the user is provided with a reminder at the place and time that he actually needs the reminder.

In one example of the present invention, a user may generate and send an e-tag to remind himself to buy a bunch of flowers for his wife on his way home from work. The user knows that he can buy the flowers from a florist located at the train station which he will use on his return journey home. In such a case, the user would create an e-tag with the message "Buy flowers" and specify the florist as the triggering location and send this e-tag to the network. In one arrangement, the network forwards the e-tag to a local e-tag service site that includes a server located at the train station. The server stores the message in a memory, The server is also equipped with, or linked to, a detector which detects the influx of people into the train station, and so effectively watches out for the user. When after finishing work the user arrives at the train station, the server with its detector detects the presence of the user and at this point sends the e-tag message "Buy flowers" to the user. In this way, the user is reminded of what he must do -buy flowers- at the location where he can do it -the florist.

In an alternative arrangement, the e-tag created by the user is transmitted to the network and acted upon by the network using location detection means, whereby it monitors the position of the user, and when there is correspondence between the position of the user and the location specified by the user in the e-tag the network transmits the message to the user.

In a further alternative arrangement, rather than the user sending the e-tag to the network, the user may directly 'pin' the e-tag at the location where he knows that he will later need reminding. For example, in the illustration above, the user on his way to work in the morning would pass through the train station, and knowing that he will, on his way home, once again be passing through the train station, would transmit the e-tag saying "Buy flowers" directly to an e-tag receiver of an e-tag service site provided at the train station (or even at the florist). This would be saved in a memory linked to the receiver (e.g. as provided by a server) at the train station, so the when the user returns to the station on his way home, a detector belonging to the e-tag service site recognises the user's presence and a transmitter releases the message to the user to "Buy flowers".

An important further advantage of the present invention is that by means of the invention it is possible for one end-user to create and post a location or event critical message for a second (or more) end-user, so that the second end-user is sent the message at a location or in response to an event specified by the first end-user. So a variation on the above illustration would the user creating an e-tag that said "Buy yourself some flowers" and attaching to it the location condition Train Station and defining the target user as his wife. In other words, the intended recipient (or beneficiary) of this e-tag is the user's wife and the user is sending an e-tag to notify his wife to buy herself some flowers when she passes the florist at the train station. In this example, rather than monitoring the train station for the arrival of the user, the detector at the e-tag service site at the train station monitors for the wife and when it detects her arrival it sends her the message. Another example of this feature of the invention, is a situation wherein a user knows that his housemate will be doing some shopping at the local supermarket and he wishes the house mate to buy a loaf of brown bread. The user can create and post an e-tag for the housemate to remind him to buy a loaf of brown bread and in which he defines the location condition as the supermarket. Accordingly, the housemate is sent the e-tag when he is at the supermarket. In a refinement of this set up, it advantageously may be that the housemate is reminded to buy the brown bread at precisely the moment when he passes near the bread counter, because the e-tag may be arranged to be aisle specific.

Other aspect and features of the present invention are defined in the appended claims.

In order to aid a more detailed understanding of the present invention, various embodiments of the invention will now be described. These should not be construed as necessarily limiting the invention but merely as examples of specific ways of putting the invention into effect. In particular, the invention will be described with reference to the accompanying drawings in which:
Figure 1 is a flow diagram illustrating an aspect of a preferred embodiment of the present invention;
Figure 2 is a schematic representation overviewing an embodiment of the present invention;
Figure 3 is a flow diagram illustrating a further aspect of a preferred embodiment of the present invention;
Figure 4 is a schematic representation overviewing a further embodiment of the present invention;
Figure 5 is a schematic representation overviewing a still further embodiment of the present invention;
Figures 6 and 7 are schematic representations illustrating a still further embodiment of the present invention;
Figure 8 is a flow diagram illustrating a further aspect of an embodiment of the present invention.

In general terms, the present invention provides:
- means whereby a user can create an electronic note or tag, which may comprise a message or reminder and which herein is referred to as an e-tag, and attach to the e-tag one or more conditions that will trigger the e-tag into effect, and
- means that executes the e-tag including monitoring for the one or more conditions associated with the e-tag, determining when the one or more conditions are satisfied and then transmitting the e-tag.

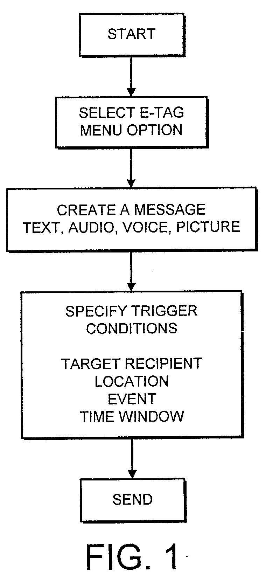

Referring initially to the process of creating an e-tag, the user can create an e-tag using any terminal device such as a mobile phone, a PDA, or PC, each of these devices being programmed with software that supports the e-tag application. On a mobile phone, the software, at least in terms of the UI, may operate in a similar, although adapted, manner to how a user currently creates an SMS. Referring to Figure 1, the phone's UI provides a Menu option relating to the e-tag feature which the user selects. On selecting this option from the Menu the user is prompted to write a text message using the keypad. As noted previously, the e-tag message may instead or additionally comprise an image file or an audio file. However, as well as the message creating facility, there are provided, as part of the e-tag UI, data fields which are to be completed by the user and which define one or more conditions specified by the user to be met in order for the message to be triggered and thus released.

Thus, in addition to the message itself, the e-tag UI may contain the following data field conditions:
Target Recipient:
Location:
Event:
Time window:

The Target Recipient field is to be completed by the user with the identity of the individual who is to receive the message once it is triggered.

The Location field is to be completed by the user if the e-tag is to be linked to a location at which the message is to be triggered.

The Event field is to be completed by the user if the e-tag is to be linked to an event occurring which is to act as the trigger for releasing the message.

The Time Window field is to be completed by the user if the e-tag is to be active, in the sense activatable, only within a certain time period.

The Target Recipient may be the user himself, it may be another user, or it may be a plurality of users. For instance, if the user wishes to inform a number of his colleagues that the venue for a particular meeting has changed, he can set an e-tag with this information and include all the names of the participants. The user may define the location at which triggering is to occur as the entrance to the building where the meeting was to be originally held so that when each of the participants defined in the e-tag arrive at the original venue building they are detected and sent a message informing them of the new venue.

The location condition may be any location having e-tag execution facility. A user may create an e-tag defining the location condition as the user's house, office or some other location. For example, a user may wish to be reminded in the morning before he departs from his house to leave a note for the milkman to deliver two extra pints of milk. The location in this case is the user's house, or even more specifically his front door. In this case, the condition to be met is the detection of the user leaving the house or going past his front door, and when this condition is met the e-tag message is transmitted to the user. More preferably, an e-tag is created in which the Target Recipient is defined as the milkman and the location set again as the house or front door, so that when the milkman approaches the user's house the milkman's presence is detected and he consequently is sent an e-tag requesting that he leaves two extra pints of milk.

In an alternative to defining a location dependent e-tag condition trigger, the user may define an event based condition trigger (although the two are not mutually exclusive). That is, the triggering and release of an e-tag is dependent upon some or other event occurring. For example, a user may set the event condition to send to himself an e-tag to pick up his wife from the airport when her plane lands. In this example, the e-tag is sent to the network and the network, which is continually provided with information about plane landings, accordingly transmits the e-tag reminder to the user. In other words, when the specified plane lands, this information is fed to the network and this causes the release of the e-tag to the user. Event conditions may be based on a wide variety of events relating for example to news, sports, weather and public services, traffic conditions. For instance, if the network is supported by information on weather, a user may set an e-tag to remind him to "Bring in the washing", in which he sets the Event condition as "when it starts raining". Event information may be derived from for instance the internet.

The Time Window may be defined by user as a period of time in which the e-tag is to be active. The Time Window allows the user to specify a lower time threshold and an upper time threshold. In the time leading up to the lower time threshold the e-tag lies dormant. In the time after the later time threshold the e-tag is deemed null and void. For example, the user may set a time window of a day during which the e-tag is to be sent if triggered and thereafter it expires if not sent.

Referring again to Figure 1, after the user has carried out the process to create an e-tag the user sends it.

Turning now to how an e-tag may be processed, the present invention provides a number of different approaches by which an e-tag may be handled and acted upon.

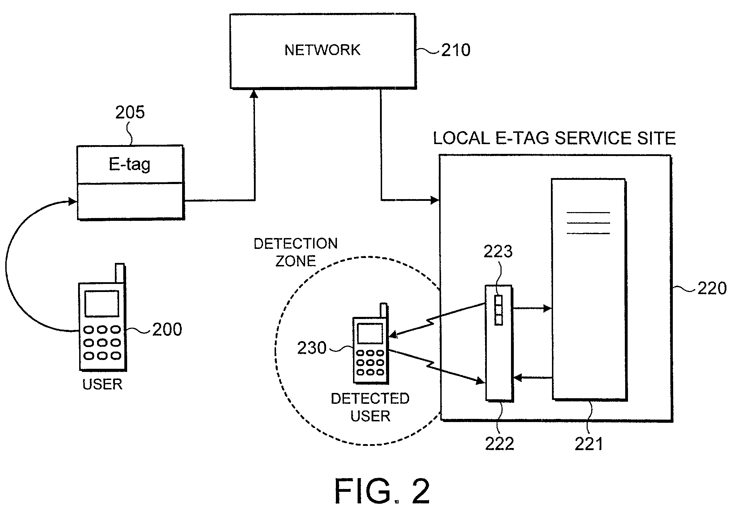

Figure 2 illustrates one embodiment in which the e-tag is processed by a local e-tag service site 220 comprising a server 221 linked to a detector 222 and a transmitter 223. Such an e-tag service site may be located in the home, office and in community locations such as train stations, airports and shopping centres.

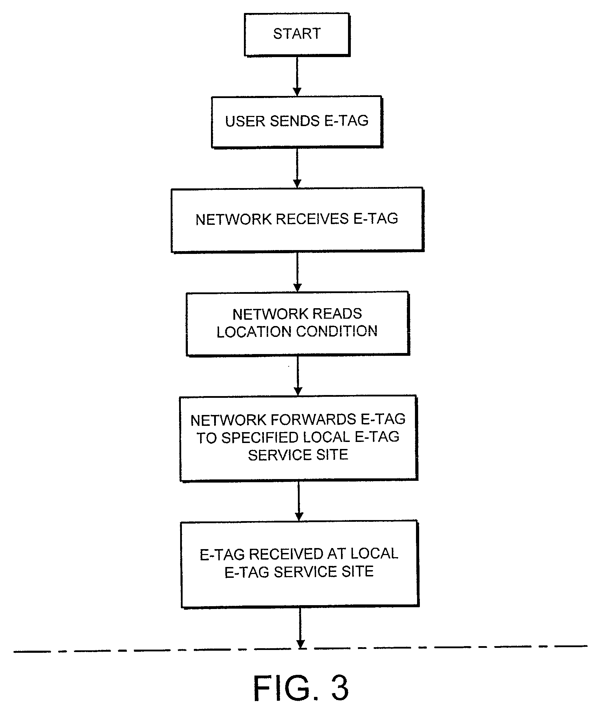

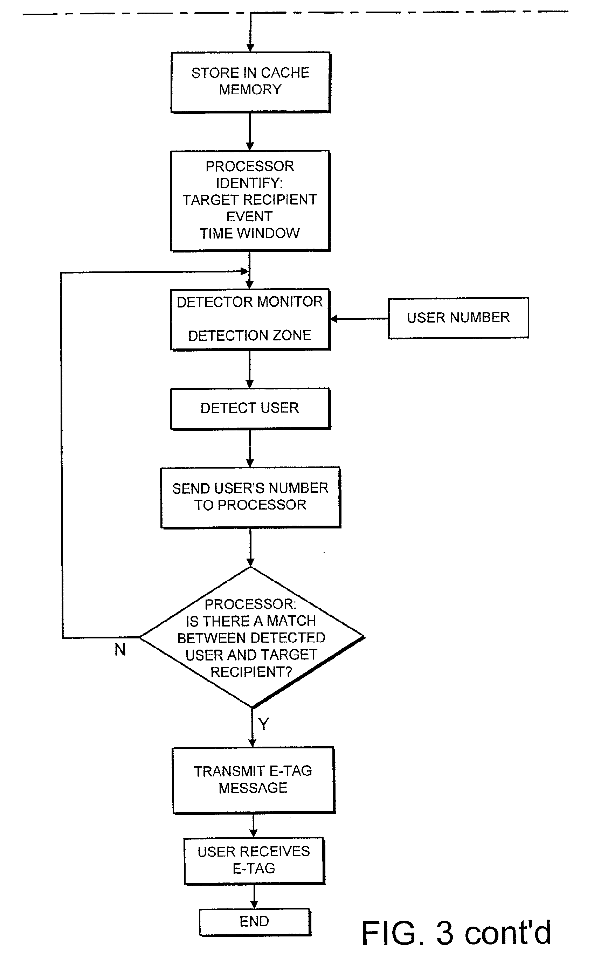

Referring to both Figures 2 and 3, in this embodiment, an e-tag 205 is created by a user 200 and is sent to a network 210 which forwards the e-tag to a specified local e-tag service site 220. The network does this by reading the location field associated with the e-tag that has been defined by the user. The e-tag that is received from the network at the local e-tag service site initially is cached in a cache memory and then fed to its processor. The processor analyses the e-tag and identifies the conditions associated with the e-tag for triggering it. Thus, the processor identifies the Target Recipient, and Event condition if there is one, and the Time Window if there is one. If there is no specified Time Window then the processor sets the e-tag as active immediately and to remain active until it is released. If the user who created the e-tag has specified a Time Window, the processor notes this and accordingly activates the e-tag only during the specified time period. As indicated above, the local e-tag service site also includes a detector that serves to detect the identity of users within pre-determined area range of the local e-tag service centre. Thus, whenever an individual enters an area serviced by such a detector, the detector detects the individual's presence and accordingly sends a signal to the processor. Likewise, whenever an individual exits an area serviced by such a detector, the detector detects the individual's switch to absence and accordingly sends a signal to the processor. The detector may be implemented in any of a number of different ways such as RFID (both inductive and capacitative), proximity sensors, LPRF such as Bluetooth and also image processing cameras. Each of these sensing techniques varies in sensitivity and the extent of the capture area and thus the specification of which system to employ is a design choice depending on the application context. The Bluetooth application is currently the most preferred technology platform for the detector. In this embodiment the detector is provided with a Bluetooth transmitter and receiver, and likewise user's terminal devices (e.g. mobile phone) are also provided with Bluetooth transmitters and receivers. Thus the detector is able to detect the presence of a user by means of the user's terminal device transmitting low power RF that is detected by the detector's receiver. In this way, the detector monitors the capture area and hence the user's identity, or at least information that may indicate a user, is captured, and this information is routed to the processor.

The processor then carries out a check to determine if a detected user 230 (Figure 2) corresponds to a Target Recipient. This check is performed by the processor comparing the detected user with a list of active Target Recipients. If no correspondence is determined then the processor may simply delete the detected user's identity.

If a correspondence is established then the e-tag message is transmitted to the detected user. This is achieved by the processor retrieving the e-tag message from the memory and outputting the message to the detector which transmits the message using its Bluetooth transmitter. The transmitter message is thus received by the user's terminal device Bluetooth receiver. An indication then appears on the user's terminal device LCD that an e-tag message has been received along with an audible alert. The user thus reads the message and whilst being at the exact location where he is able to take the necessary action. Once transmitted, the e-tag is spent.

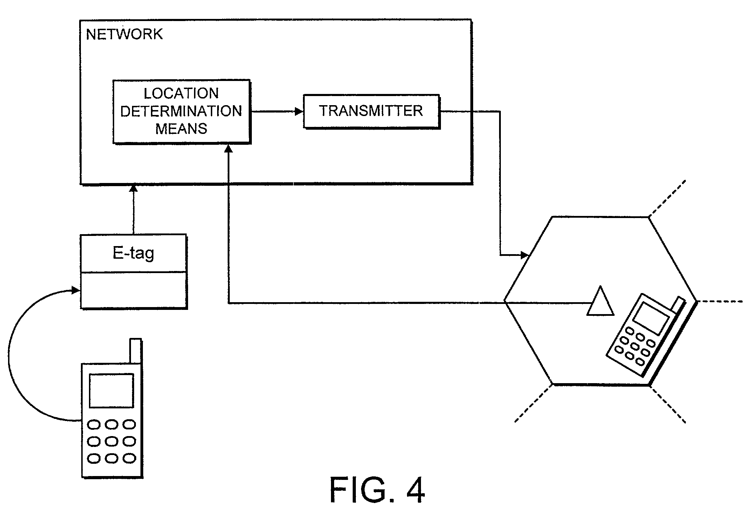

In an alternative arrangement, the e-tag processing and administering is provided by the network as illustrated in Figure 4. In this arrangement, the network receives the e-tag and rather than forwarding to a local e-tag service site, the network performs the functions of identifying and monitoring for the Target Recipient, noting the location condition and transmitting the e-tag message when the Target Recipient fulfils the location condition criterion. For example, a cellular telecommunication network can establish the location of a user's mobile phone by first a coarse determination based upon which cell of the system the user is located (e.g. by using the user's mobile phone paging signal) and then if necessary by a fine determination using triangulation calculations taken from signals received from the mobile phone at neighbouring base stations. In this way, when the network computes that the Target Recipient is at the location defined by the Location condition the network sends the Target Recipient the e-tag message.

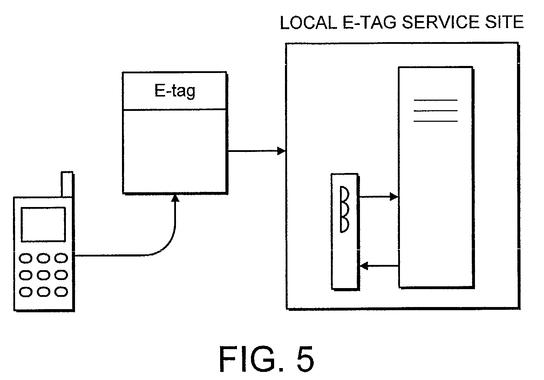

In a further alternative arrangement, an e-tag may bypass the network entirely and be posted (i.e. pinned or registered) at a desired location directly by the user as indicated in Figure 5. Like the first arrangement described above, this arrangement also utilises local e-tag service sites. However, rather than a user created e-tag being sent to the local e-tag service site via the network, the user himself posts an e-tag at the site when he is physically at the site, so that when later in time the specified e-tag conditions are satisfied the e-tag service site will send the e-tag message. This may be achieved by the user transmitting the e-tag to the detector at the site via Bluetooth. Once received in the site the e-tag is processed in the same way as described in relation to the earlier embodiment, i.e. monitoring, comparing and transmitting.

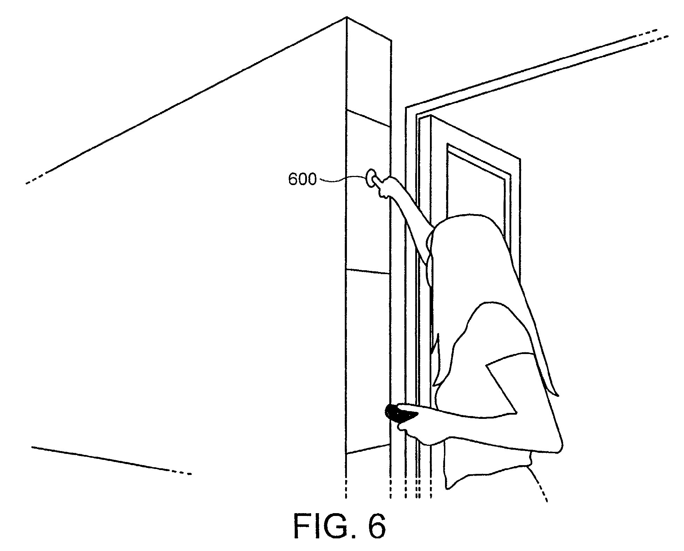

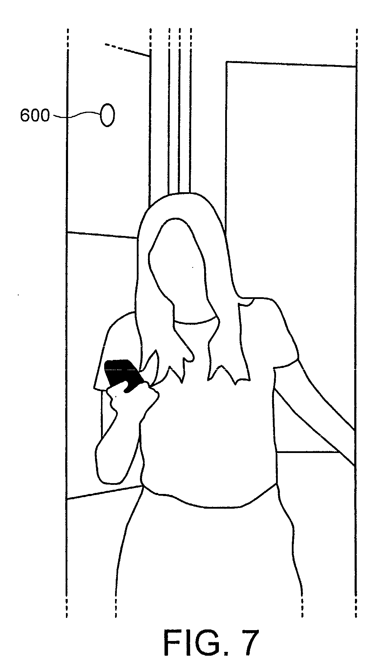

In a different form of the present invention, an e-tag comprises a device termed herein as an e-sticky 600 as illustrated in Figures 6 and 7.

An e-sticky is a physical device containing programmable data fields for a message and the identity of a Target Recipient. An e-sticky is created in substantially the same manner as described above, with the user using his terminal device to create a message and define conditions. The e-sticky is then physically placed at the location where the user believes that Target Recipient will later come within range of. When the Target Recipient does come within range of the e-sticky, the e-sticky detects the presence of the Target Recipient by making a match with an active list of Target Recipients drawn for the memory and a processor instructs a transmitter to send the e-tag message to the Target Recipient and this causes an audible alert on the Target recipient's mobile phone. In preferred implementations, the detection and transmission in carried out by Bluetooth. Thus, an e-sticky is a small, stand-alone, physical device which enables a user to leave an electronic trigger in a physical location. An e-sticky may be reprogrammable so that it can be used over and over again, or it may be a once-only device .

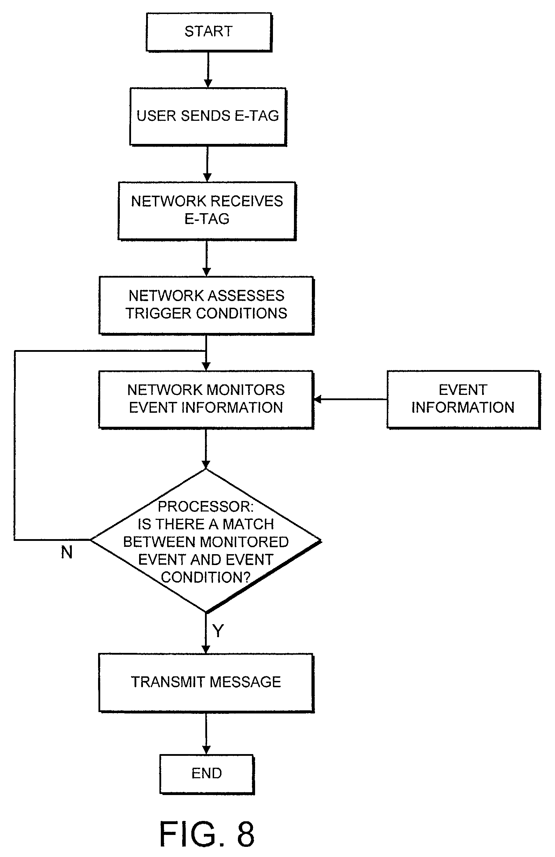

As noted previously, the present invention extends to cover event based e-tags and this process is outlined in the flowchart of Figure 8. An event based e-tag is an e-tag in which an event occurring provides the triggering stimulus for the e-tag. For example, an event may be news related, or traffic related, or weather related, or any other form of monitorable event. In this aspect of the invention the user defines an event as the condition for triggering the release of an e-tag. Thus, the user completes the data field relating to Event condition in the e-tag UI according which event the user wishes to make the e-tag conditional upon. In this regard the UI may present a number of potential event options that can be monitored by the network for selection by the user. For example, one event option may monitoring share prices, and so a user may create an e-tag setting an event condition as "If my Nokia shares increase above X points then send an e-tag to my broker to sell Y number of shares". In this example, the network monitors the share price fluctuations and every time there is a change it compares the real time price to the defined condition price, and as soon as there is a correspondence between the defined condition price and the monitored share price, the network sends an e-tag to the broker to sell Y number of shares. Another example might be traffic related in which the user creates an e-tag in which he defines an event condition as "When the traffic heading into London on the M3 is anticipated to allow me to get home in less than half an hour, send me an e-tag accordingly". In this example, the network monitors the traffic level going towards London on the M3, and it computes an expected journey time based on the monitored traffic. To do this, the network must know the user's current position and home location. Once the traffic conditions are such that the expected journey time is computed to be below half an hour it sends an e-tag to the user. In a fun application, an e-tag could be made dependent on a sports result. For instance, ahead of a critical football match a user may create an e-tag in which he sets the triggering event condition as "If Manchester United beat Arsenal then send a message to (....here, the user defines a list of Target Recipients who are my Arsenal supporters) saying "Championes, championes, olay olay olay" and adding to the text message the appropriate background music. In this example, the network monitors the football match final score and if Manchester United beat Arsenal, it transmits the message to the Target Recipients.

Thus it can be seen that the present invention has a great many uses and a wide field of application. Many variations, modifications and additional features are possible which nevertheless fall within the scope of the present invention.

As one example of a variant, if a user wishes to be reminded of a particular thing at a particular location, then rather the whole e-tag message being sent to the network and then on triggering the whole message being sent back to the user, it is possible for the message portion of the e-tag to be saved in the terminal device memory and then on triggering for only a signal to be sent back to the user, this signal be used to activate the message stored the terminal device to be alerted to the user.

Optionally, the e-tag may comprise a pre-written message that is selected by the user.

In a modification, once an e-tag is successfully triggered and released a confirmation of receipt may be sent to the originating user, i.e. the user that created and posted the e-tag is sent a message indicating successful delivery.

The invention may be implemented using Global Positioning System (GPS). For example, a location dependent e-tag may be created by one user and sent to another user. This e-tag then remains dormant in the recipient user's mobile phone (perhaps apart from an initial "You have just received an e-tag" message display) which is equipped with a GPS receiver that locates the mobile phone's position. When the GPS receiver determines a correspondence between the Location condition attached to the e-tag and the mobile's phone position, it instructs the release of the e-tag message.

The invention further presents advantages in terms of security. For example, if a user knows that a friend is going to be visiting him for dinner at home, but the user needs to leave his house, maybe to buy some ingredients, then the user can leave an e-tag intended for the visitor saying "Back in 15 minutes" in case the visitor arrives during the time the user is away from the house. Thus, if the visitor arrives when the user is away, the visitor's presence is detected and he is sent the e-tag. In this way, it is only the visitor who is sent the message, no one else can know that the user is absent from the house. Thus the e-tag has effect when the visitor is actually at the house and while the user is absent. In contrast, the present day solution may be to leave a physical hand-written note on the user's front door for the visitor saying "Back in 15 minutes". This of course opens up the risk that anybody not intended by the user to read the note can do so and this may prejudice the user's home's security.

In the context of the present invention, the term network as used herein covers all types of networks including cellular networks, IP networks, the internet, LANs, WLANs etc.

In view of the foregoing, it should be appreciated that the present invention may be embodied in other specific forms without departing from its essential attributes. Reference should thus be made to the appended claims and other general statements herein rather than to the foregoing description as indicating the scope of invention.

Furthermore, each feature disclosed in this specification (which term includes the claims) and/or shown in the drawings may be incorporated in the invention independently of other disclosed and/or illustrated features. In this regard, the invention includes any novel feature or combination of features disclosed herein either explicitly or any generalisation thereof irrespective of whether or not it relates to the claimed invention or mitigates any or all of the problems addressed. The appended abstract as filed herewith is included in the specification by reference.

## Claims

1. A system comprising first means adapted to be user actuable for creating an e-tag and comprising means for defining one or more intended recipients of said e-tag and means for defining a location condition associated with said e-tag, and second means adapted to be responsive to said e-tag such that said one or more intended recipients is notified of said e-tag when said location condition is fulfilled.

2. A system according to claim 1, wherein said second means comprises means for receiving the e-tag and means for executing the e-tag including means for monitoring an area associated with said location condition and detecting for said one or more intended recipients and means for transmitting the e-tag to detected ones of said one or more intended recipients in response to the monitoring means determining a correspondence between a detected intended recipient and the one or more recipients defined in said e-tag.

3. A system according to claim 1 or claim 2, wherein said first means is provided by a client terminal.

4. A system according to any preceding claim, wherein said second means is provided by an e-tag service site.

5. A system according to claim 4, wherein said e-tag service site comprises a server linked to a detector for detecting for users in a pre-defined area and a transmitter, said server including a processor and a memory, said processor being configured to compare a detected user with an intended recipient list and instructing said transmitter to transmit said e-tag when said processor determines a match between said detected user and an intended recipient.

6. A system accordingly to any of claims 1 to 3, wherein said second means is provided by a network.

7. A system comprising first means adapted to be user actuable for creating an e-tag and comprising means for defining one or more intended recipients of said e-tag and means for defining an event condition associated with said e-tag, and second means adapted to be responsive to said e-tag such that said one or more intended recipients is notified of said e-tag when said event condition is fulfilled.

8. An e-tag device comprising first means adapted to be user actuable for creating an e-tag and comprising means for defining one or more intended recipients, second means for executing said e-tag comprising means for monitoring a pre-defined area for said one or more intended recipients and means for transmitting said e-tag to said one or more intended recipients when said monitoring means detects the presence of one or more of said intended recipients in said pre-defined area.

9. A method for effecting an e-tag comprising
generating an e-tag including defining one or more intended recipients and
defining a location condition and/or an event condition,
monitoring for the one or more intended recipient at a location associated with said location condition, and/or monitoring for the event condition, and
transmitting said e-tag to said one or more of said intended recipients when said location condition and/or said event conditions is satisfied.

10. A computer program product on a carrier comprising means adapted to be user operable for creating an e-tag comprising means for defining one or more intended recipients of said e-tag and means for defining a location condition and/or an event condition associated with said e-tag.

11. A computer program product on a carrier comprising means adapted to be responsive to an e-tag such that one or more intended recipients associated with the e-tag is notified of said e-tag when a location condition and/or an event condition associated with the e-tag is fulfilled.

12. A client terminal comprising means adapted to be user operable for creating an e-tag comprising means for defining one or more intended recipients of said e-tag and means for defining a location condition and/or an event condition associated with said e-tag and means for sending the e-tag.
